# FASCICULE DE BREVET EUROPEEN

(11) **EP 2 707 615 B1**
(45) Date de publication et mention de la délivrance du brevet: **21.03.2018**
(21) Numéro de dépôt: 12725117.1
(22) Date de dépôt: 09.05.2012
(51) Int. Cl.: F16D 3/68

(54) **COURONNE POUR REDUCTEUR A TRAIN EPICYCLOIDAL**
GETRIEBE FÜR EINEN GETRIEBEMOTOR MIT EINEM PLANETENGETRIEBEZUG
GEAR FOR A GEAR MOTOR HAVING AN EPICYCLIC GEAR TRAIN

(30) Priorité: 10.05.2011 FR 1153990
(43) Date de publication de la demande: 19.03.2014
(73) Titulaire: Valeo Equipements Electriques Moteur, 94046 Créteil Cedex (FR)
(72) Inventeur: DROZDEK, Marius, F-38280 Villette D'anthon (FR); MORNIEUX, Christian, F-69600 Oullins (FR)
(86) Numéro de dépôt international: PCT/FR2012/051016
(87) Numéro de publication internationale: WO 2012/153060

(56) Documents cités:
- EP-A2- 1 457 670
- GB-A- 832 092
- US-A- 2 764 003

## Description

### DOMAINE TECHNIQUE

La présente invention concerne une couronne pour réducteur à train épicycloïdal, notamment pour démarreurs de véhicule automobile, ainsi qu'un réducteur à train épicycloïdal comportant une telle couronne.

### ETAT DE LA TECHNIQUE ANTERIEUR

Les couronnes pour réducteurs à trains épicycloïdaux comportent généralement un boîtier extérieur de forme sensiblement cylindrique, dans lequel est insérée une bague intérieure, appelée aussi planétaire extérieur, qui comprend une denture intérieure qu'engrènent les roues satellites du réducteur. La bague intérieure est immobile en rotation par rapport au boîtier extérieur.

Afin de limiter les chocs tangentiels reçus par le boîtier extérieur notamment lors du démarrage, le document FR2829821 propose d'interposer des blocs amortisseurs entre le boîtier extérieur et la bague intérieure de façon à limiter le couple transmis par la bague intérieure au boîtier extérieur.

Toutefois, ces blocs amortisseurs peuvent s'écraser si le choc tangentiel est trop important. C'est pourquoi le document FR2829813 propose de pourvoir la couronne d'un dispositif de limitation du mouvement relatif angulaire entre la bague intérieure et le boîtier extérieur.

Une autre couronne avec des blocs amortisseurs est connue du document EP-A-1457670.

Malgré tout, les blocs amortisseurs des couronnes décrites présentent une durée de vie réduite car ils sont soumis à des forces de cisaillement importantes qui peuvent conduire à leur déchirure.

Or, si les blocs amortisseurs se déchirent, cela peut conduire à la détérioration du boîtier extérieur, puisque les chocs tangentiels provenant de la couronne intérieure ne sont plus absorbés par les amortisseurs.

En outre, la détérioration des amortisseurs conduit à une génération de bruit plus importante lors du démarrage du véhicule.

### EXPOSE DE L'INVENTION

L'invention vise à remédier aux inconvénients de l'état de la technique en proposant une couronne pour réducteur à train épicycloïdal qui présente une durée de vie et une résistance améliorées.

Un autre objet de l'invention est de proposer une couronne pour réducteur à train épicycloïdal dans lequel le bruit est diminué sur du long terme.

Pour ce faire, est proposé, selon un premier aspect de l'invention, une couronne pour réducteur à train épicycloïdal, comprenant :
- un boîtier extérieur;
- une bague intérieure comprenant une denture intérieure apte à être engrenée par des roues satellites du réducteur, la bague intérieure étant montée contre le boîtier extérieur formant entre eux un logement
- au moins un plot d'écrasement situé dans le logement,
- au moins un amortisseur situé dans le logement, l'amortisseur étant disposé par rapport au plot d'écrasement de façon à amortir les mouvements angulaires de la bague intérieure par rapport au boîtier extérieur dans au moins une direction;
caractérisée en ce que le plot d'écrasement comprend deux surfaces radiales dont une est en contact glissant avec une surface radiale d'une des bagues intérieure et extérieure et l'autre est solidaire en rotation avec l'autre bague intérieure ou extérieure, et en ce que le plot d'écrasement, les deux bagues intérieure et extérieure forment dans une partie du logement, une cavité fermée de volume variable dans lequel est situé l'amortisseur de façon à ce que les déformations dudit amortisseur soient limitées.

Ainsi, le fait de placer l'amortisseur dans une cavité fermée permet de contrôler la déformation de l'amortisseur et donc d'éviter qu'il se déforme de manière aléatoire. Les risques de déchirure de l'amortisseur sont ainsi limités, même après un grand nombre de cycles de déformation de l'amortisseur. La cavité fermée a un volume variable qui est fonction de la position entre le plot d'écrasement et la surface radiale en contact glissant avec le plot d'écrasement.

Par contact glissant, on entend un contact sans montage serré.

La couronne selon l'invention peut également présenter une ou plusieurs des caractéristiques ci-après, prises isolément ou selon toutes les combinaisons techniquement possibles.

Avantageusement, le boîtier extérieur comprend un creux fermé d'un côté par la bague intérieure et dans laquelle le plot d'écrasement est solidaire de la bague intérieure.

Selon un mode de réalisation, le boîtier extérieur comporte une plaque de fermeture, la cavité fermée de volume variable étant formée dans le logement, par la bague intérieure, le plot d'écrasement et au moins une partie de la plaque de fermeture. Ainsi, lorsque le plot d'écrasement entre en collision avec l'amortisseur, la déformation de l'amortisseur est contenue par les parois de la cavité fermée de sorte que les risques de détérioration de l'amortisseur sont limités.

L'amortisseur est de préférence agencé de façon à pouvoir se déformer dans la cavité fermée jusqu'à une contrainte prédéterminée. Ainsi, la contrainte jusqu'à laquelle l'amortisseur peut se déformer peut être choisie de façon à ce que l'amortisseur ne soit pas endommagé même s'il est soumis à plusieurs cycles de démarrage.

Selon différents modes de réalisation :
- l'amortisseur présente des dimensions radiales inférieures aux dimensions radiales du logement ; et/ou
- l'amortisseur est creux.

Ces caractéristiques permettent à l'amortisseur de pouvoir se déformer dans la cavité fermée. De préférence, l'amortisseur est creux, cela permet d'éviter que les déformations se fassent contre les surfaces de la cavité et donc que l'amortisseur se déchire entre la surface radiale creuse et le plot d'écrasement.

Avantageusement, le plot d'écrasement est pourvu d'un ergot logé dans un évidement du boîtier extérieur, l'ergot étant agencé par rapport à l'évidement de façon à venir en butée contre une paroi de l'évidement lorsque la bague intérieure a effectué une course angulaire prédéterminée par rapport au boîtier extérieur.

Ainsi, cet ergot permet de limiter l'écrasement de l'amortisseur afin de ne pas l'endommager. De plus, le fait de disposer l'ergot à cet emplacement permet de ne pas augmenter la taille de la couronne radialement ou axialement pour rajouter cette fonction.

L'évidement est de préférence dimensionné de façon à définir un écrasement maximal de l'amortisseur en cas de mouvement angulaire de la bague intérieure par rapport au boîtier. Cet écrasement maximal est de préférence choisi de façon à ce que l'amortisseur ne soit pas endommagé lorsqu'il subit plusieurs fois cet écrasement.

Le logement est de préférence situé entre la bague intérieure et l'évidement.

L'évidement est de préférence réalisé dans la plaque de fermeture.

Selon un premier mode de réalisation, le plot d'écrasement fait saillie axialement de la bague intérieure.

Dans ce cas, l'ergot fait de préférence saillie axialement du plot d'écrasement auquel il est fixé.

Selon un deuxième mode de réalisation, la bague intérieure est montée coaxialement à l'intérieur du boîtier extérieur, le plot d'écrasement faisant saillie radialement de la bague intérieure.

Dans ce cas, l'ergot fait de préférence saillie radialement du plot d'écrasement auquel il est fixé.

Un deuxième aspect de l'invention concerne un réducteur à train épicycloïdal pour démarreur de véhicule automobile comportant une couronne selon le premier aspect de l'invention.

Un troisième aspect de l'invention concerne un démarreur de véhicule automobile du type à réducteur à train épicycloïdal comportant une couronne selon le premier aspect de l'invention.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en perspective d'une couronne selon un mode de réalisation de l'invention ;
- La figure 2, une autre vue en perspective de la couronne de la figure 1 ;
- La figure 3, une vue éclatée de la couronne de la figure 1 ;
- La figure 4, une vue en perspective de la bague intérieure de la couronne de la figure 1 ;
- La figure 5, une vue en perspective du boîtier extérieur de la couronne de la figure 1 ;
- La figure 6, une vue agrandie d'un logement du boîtier extérieur de la figure 5 ;
- La figure 7, une autre vue en perspective du boîtier extérieur de la figure 5 ;
- La figure 8, une vue en perspective d'une couronne selon un autre mode de réalisation de l'invention ;
- Les figures 9 et 10, deux vues éclatées de la couronne de la figure 8.

Pour plus de clarté, les éléments identiques ou similaires sont repérés par des signes de références identiques sur l'ensemble des figures.

### DESCRIPTION DETAILLEE D'AU MOINS UN MODE DE REALISATION

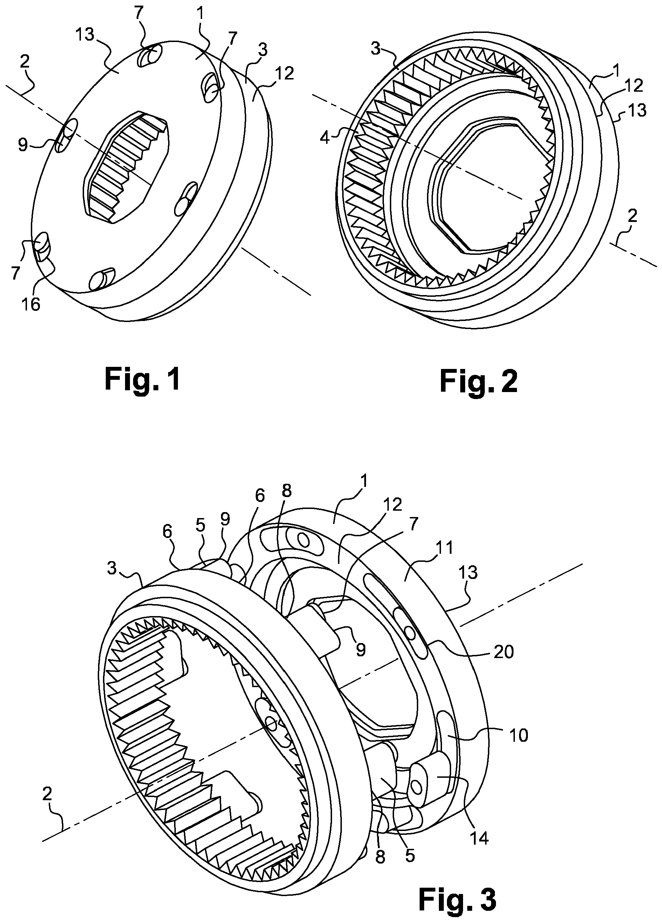

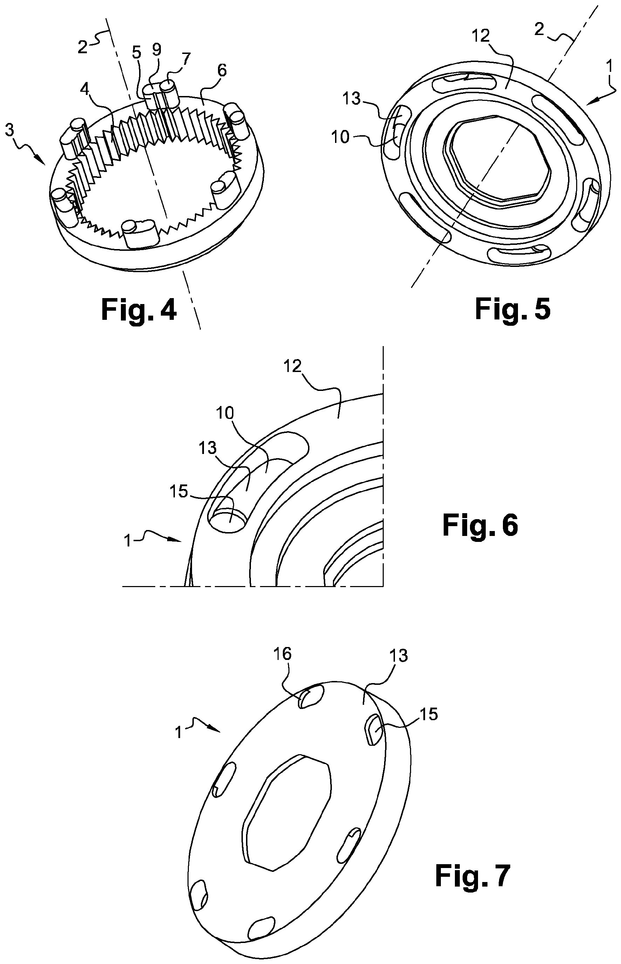

Une couronne pour réducteur à train épicycloïdal selon un premier mode de réalisation de l'invention est décrite en référence aux figures 1 à 7.

Cette couronne comporte un boîtier extérieur 1 qui présente une symétrie de révolution autour d'un axe de référence 2. Le boîtier extérieur 1 est de préférence cylindrique autour de l'axe de référence 2.

Dans ce document, on désigne par « axial » une direction parallèle à l'axe de référence, par « radial », une direction perpendiculaire à l'axe de référence et par « angulaire », une direction définie par une ligne décrite par un point tournant autour de l'axe de référence 2.

La couronne comporte également une bague intérieure 3 qui est montée contre le boîtier extérieur 1. La bague intérieure 3 présente également une symétrie de révolution par rapport à l'axe de référence 2, et elle est de préférence cylindrique autour de l'axe de référence. La bague intérieure 3 comporte une périphérie interne 4 pourvue de dentures aptes à être engrenées par des roues satellites du réducteur.

Dans ce mode de réalisation, la bague intérieure 3 est montée en appui axial contre le boîtier extérieur 1. En fonctionnement, la bague intérieure 3 est retenue axialement contre le boîtier extérieur 1 par les autres pièces du réducteur dans lequel la couronne est montée.

La bague intérieure 3 comporte une pluralité de plots d'écrasement 5 qui font saillie axialement d'une face d'appui 6 radiale de la bague intérieure 3. Ces plots d'écrasement 5 sont répartis circonférentiellement autour de l'axe de référence 2. Dans cet exemple de réalisation, la bague intérieure 3 comporte six plots d'écrasement 5 régulièrement angulairement répartis par rapport à l'axe de référence 2, qui font saillis de la face d'appui 6. Chaque plot d'écrasement 5 s'étend suivant l'axe de référence 2.

Dans ce mode de réalisation, les plots d'écrasement 5 et la bague intérieure 3 forment une pièce d'un seul tenant, c'est-à-dire que les plots d'écrasement 5 et la bague intérieure 3 sont monobloc.

Le boîtier extérieur 1 est formé par un anneau 11 et une plaque de fermeture 13. La plaque de fermeture 13 et l'anneau 11 forment une pièce d'un seul tenant dans ce mode de réalisation. L'anneau 11 présente une face d'appui 12 destinée à venir en appui axial contre la face d'appui 6 de la bague intérieure 3.

L'anneau 11 est traversé de part en part par des logements 10. Les logements 10 du boîtier extérieur 1 et les plots d'écrasement 5 de la bague intérieure 3 sont conformés de façon à ce que, lorsque la bague intérieure 3 est en appui axial contre le boîtier extérieur 1, chaque plot d'écrasement 5 est inséré dans un des logements 10 du boîtier extérieur 1 et sont en contact glissant avec la plaque de fermeture 13.

Dans la suite, pour simplifier la description, nous allons décrire en détail un des logements 10 et les éléments qu'il contient. Les autres logements 10 sont de préférence identiques à ce logement décrit en détail.

Ainsi, ce logement 10 du boîtier extérieur 1 contient, outre le plot d'écrasement 5, au moins un amortisseur 14. Cet amortisseur 14 est de préférence réalisé en élastomère. Cet amortisseur 14 est positionné dans le logement 10 à côté du plot d'écrasement 5 de façon à amortir la rotation de la bague intérieure 3 par rapport au boîtier extérieur 1 dans une direction. Plus précisément, l'amortisseur 14 est situé dans le logement 10 de façon à ce que, lorsque la bague intérieure 3 tourne par rapport au boîtier extérieur 1 dans cette direction, le plot d'écrasement 5 vienne en collision contre l'amortisseur 14 de façon à amortir le choc subi par le boîtier extérieur 1.

Lorsque la bague intérieure 3 peut tourner dans les deux directions par rapport au boîtier extérieur 1, on peut prévoir de placer un amortisseur 14 de chaque côté du plot d'écrasement 14 de façon à amortir les chocs dans les deux directions de rotation ou de placer un amortisseur 14 d'un côté d'un plot d'écrasement 5 et de placer un autre amortisseur 14 de l'autre côté d'un autre plot d'écrasement 5.

Par ailleurs, l'amortisseur 14 est enfermé dans une cavité fermée de façon à ce que les déformations possibles de l'amortisseur 14 soient limitées par les parois de cette cavité fermée. La cavité fermée a un volume variable en fonction de la position entre le plot d'écrasement et la surface radiale contre lequel il glisse.

Dans cet exemple, la surface radiale est une partie de la surface de la plaque de fermeture.

Dans cet exemple de réalisation, la cavité fermée dans laquelle est contenu l'amortisseur 14 est délimitée axialement par la face d'appui 6 de la bague intérieure 1 et par une surface de la plaque de fermeture parallèle à la surface 6 formant le fond du logement. Cette surface de la plaque de fermeture ferme est en contact glissant avec le plot d'écrasement. En outre, la cavité fermée est délimitée radialement et angulairement par les parois du logement 10 et par le plot d'écrasement 5.

Ainsi, en cas de rotation de la bague intérieure 3, par rapport au boîtier extérieur 1, le plot d'écrasement 5 vient s'écraser contre l'amortisseur 14, ce qui entraîne une diminution du volume de la cavité fermée dans laquelle est contenu l'amortisseur 14. L'amortisseur 14 est alors comprimé dans la cavité fermée jusqu'à une contrainte prédéterminée.

Les dimensions de l'amortisseur 14 et de la cavité fermée dans laquelle est contenu l'amortisseur 14 sont choisies en fonction de la déformation maximale voulue pour l'amortisseur 14. Pour que l'amortisseur 14 puisse se déformer dans la cavité fermée, on peut par exemple choisir un amortisseur 14 qui présente un volume inférieur à celui de la cavité fermée, ou bien on peut choisir un amortisseur 14 qui est creux comme représenté sur la figure 3. Dans le cas d'un amortisseur 14 qui présente un volume inférieur à celui de la cavité fermée, il est préférable que la distance circonférentielle de la cavité soit identique à celle de l'amortisseur et que ce soit la largeur radiale de la cavité qui soit plus importante que celle de l'amortisseur. Ce mode de réalisation permet d'amortir le choc, dés le déplacement angulaire de la bague intérieure par rapport au boîtier extérieur.

De préférence, les parois de la chambre sont arrondies pour éviter tout déchirement de l'amortisseur lorsqu'il se déforme.

Comme on peut le voir sur la figure 3, l'amortisseur 14 est cylindrique et il présente en son centre un trou 20 également cylindrique qui s'étend suivant l'axe de référence 2.

En l'absence de mouvement angulaire de la bague intérieure 3 par rapport au boîtier extérieur 1, l'amortisseur 14 présente, en l'occurrence, des dimensions angulaires sensiblement égales aux dimensions angulaires du plot d'écrasement 5 et sensiblement égales à la moitié des dimensions angulaires du logement 10.

Le fait d'enfermer l'amortisseur 14 dans la cavité fermée, permet de contrôler ses déformations et d'éviter que les déformations de l'amortisseur soient aléatoires. Ainsi, les risques de déchirure de l'amortisseur sont limités, même après un grand nombre de cycle de démarrage du véhicule utilisant une couronne selon l'invention.

Par ailleurs, chaque plot d'écrasement 5 présente une première face transversale 8 au contact de la face d'appui 6 de la bague intérieure 3 et une deuxième face transversale 9. Par « transversale » on entend une surface perpendiculaire à l'axe de référence 2.

Chaque plot d'écrasement 5 comporte, sur sa deuxième face transversale 9, au moins un ergot 7. Dans cet exemple de réalisation, cet ergot 7 est disposé en saillie axial de la deuxième face transversale 9. Cet ergot 7 est, dans cet exemple de réalisation, disposé sur une extrémité de la deuxième face transversale 9. Cet ergot 7 présente ici une section cylindrique mais pourrait être sous une autre forme. Plus précisément, cet ergot 7 présente de préférence des dimensions transversales égales à celles du plot d'écrasement 5 sur lequel il est fixé.

Cet ergot 7 présente des dimensions angulaires inférieures à celles de ce plot d'écrasement 5.

La plaque de fermeture 13 est percée par des évidements 15 formant avec les logements 10 des ouvertures traversant axialement le boîtier externe 1. Ces évidements 15 sont agencés de façon à ce que, lorsque le plot d'écrasement 5 est inséré dans un des logements 10, l'ergot 7 fixé à ce plot d'écrasement 5 soit inséré dans ledit évidement 15. En outre, l'évidement 15 s'étend angulairement de façon à autoriser des débattements angulaires de l'ergot 7 et donc du plot d'écrasement ainsi que la bague intérieur 3 par rapport au boîtier extérieur 1. Toutefois, l'évidement 15 présente des dimensions angulaires telles que, lorsque la course angulaire de la bague intérieure 3 par rapport au boîtier extérieur 1 a atteint une valeur limite, qui correspond à l'écrasement maximal autorisé de l'amortisseur 14 par le plot d'écrasement 5, l'ergot 7 vienne en butée angulaire contre une paroi d'arrêt 16 de l'évidement 15, de sorte que la course angulaire de la bague intérieure 3 est stoppée par rapport au boîtier extérieur 1. Ainsi, l'ergot 7 et l'évidement 15 permettent d'éviter que l'amortisseur 14 ne subisse des contraintes trop importantes, et donc ils permettent de réduire l'endommagement des amortisseurs 14.

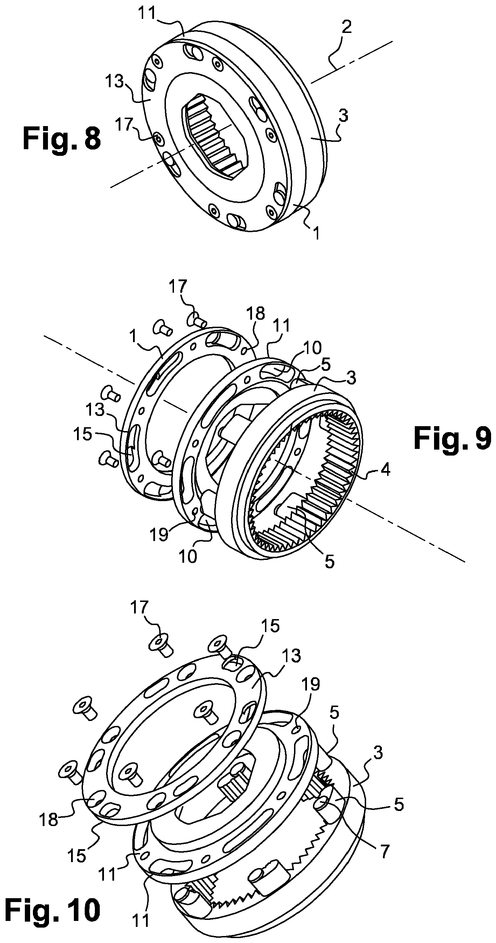

Les figures 8 à 10 représentent un autre mode de réalisation de l'invention dans lequel la couronne est identique à la couronne décrite en référence aux figures 1 à 7, à l'exception du fait que la plaque de fermeture 13 n'est pas monobloc avec l'anneau 11, mais elle est fixée à l'anneau 11, grâce à des vis 17 qui traversent des trous 18 de la plaque de fermeture et qui sont insérées dans des trous taraudés 19 de l'anneau 11. La plaque de fermeture peut être fixée à l'anneau par d'autres moyens de fixation, tel que clipsage, montage séré.

Dans ces modes de réalisations, la bague intérieure 3 et le boîtier extérieur 1 peuvent être métalliques.

Selon un autre mode de réalisation non représenté, la chambre est constituée dans la bague intérieure et non dans l'anneau, et les plots d'écrasements sont en saillie de la face d'appui 12 de l'anneau et non de la bague intérieure.

Selon un autre mode de réalisation non représenté, la chambre est constituée à la fois dans la bague intérieure et à la fois dans l'anneau, et les plots d'écrasements sont amovibles. Dans ce mode de réalisation, lorsque la bague intérieure est soumise à un couple qui déplace angulairement la bague intérieure par rapport au boîtier extérieur, une paroi située à une des extrémités de la chambre de la bague intérieure en vis-à-vis du plot d'écrasement pousse le plot d'écrasement, lequel comprime l'amortisseur. La cavité contenant l'amortisseur est fermée afin de contrôler sa déformation.

Selon les différents modes de réalisation, l'ergot peut être en saillie radialement ou axialement sur la bague externe pour coopérer avec un logement soit situé sur le boîtier extérieur soit sur une pièce solidaire en rotation par rapport au boîtier extérieur. L'ergot peut aussi être situé sur le boîtier extérieur ou sur une pièce solidaire de ce boîtier extérieur et inséré dans un logement de la bague intérieure pour limiter la déformation élastique.

Naturellement, l'invention n'est pas limitée aux modes de réalisation décrits en référence aux figures et diverses modifications peuvent être envisagées sans sortir du cadre de l'invention. En particulier, le nombre de plots d'écrasement et de logements n'est pas limitatif. En outre, on pourrait imaginer d'autres formes de plots d'écrasements, d'ergots ou encore d'amortisseur.

## Revendications

1. Couronne pour réducteur à train épicycloïdal, comprenant :
- un boîtier extérieur (1);
- une bague intérieure (3) comprenant une denture intérieure (4) apte à être engrenée par des roues satellites du réducteur, la bague intérieure (3) étant montée contre le boîtier extérieur (1) formant entre eux un logement (10)
- au moins un plot d'écrasement (5) situé dans le logement (10),
- au moins un amortisseur (14) situé dans le logement (10), l'amortisseur (14) étant disposé par rapport au plot d'écrasement (5) de façon à amortir les mouvements angulaires de la bague intérieure (3) par rapport au boîtier extérieur (1) dans au moins une direction;
- le plot d'écrasement comprenant deux surfaces radiales dont une est en contact glissant avec une surface radiale du boîtier extérieur ou de la bague intérieure et l'autre est solidaire en rotation avec la bague intérieure ou du boîtier extérieur, et **caractérisée en ce que** le plot d'écrasement, le boîtier extérieur et la bague intérieure forment dans une partie du logement, une cavité fermée de volume variable dans lequel est situé l'amortisseur de façon à ce que les déformations dudit amortisseur (14) soient limitées.

2. Couronne selon la revendication précédente, dans laquelle le boîtier extérieur (1) comprend un creux fermé d'un côté par la bague intérieure (1) et dans laquelle le plot d'écrasement (5) est solidaire de la bague intérieure.

3. Couronne selon l'une des revendications précédentes, dans laquelle le boîtier extérieur (1) comporte une plaque de fermeture (13), la cavité fermée étant formée par le logement (10), la bague intérieure (3), le plot d'écrasement (5) et au moins une partie de la plaque de fermeture (13).

4. Couronne selon l'une des revendications précédentes, dans laquelle l'amortisseur (14) est agencé de façon à pouvoir se déformer dans la cavité fermée jusqu'à une contrainte prédéterminée.

5. Couronne selon l'une des revendications précédentes, dans laquelle l'amortisseur (14) présente des dimensions radiales inférieures aux dimensions radiales du logement (10).

6. Couronne selon l'une des revendications précédentes, dans laquelle l'amortisseur (14) est creux.

7. Couronne selon l'une des revendications précédentes, dans laquelle le plot d'écrasement (5) est pourvu d'un ergot (7) logé dans un évidement (15) du boîtier extérieur (1), l'ergot (7) étant agencé par rapport à l'évidement (15) de façon à venir en butée contre une paroi de l'évidement (15) lorsque la bague intérieure (3) a effectué une course angulaire prédéterminée par rapport au boîtier extérieur (1).

8. Couronne selon la revendication précédente, dans laquelle l'évidement (15) est dimensionné de façon à définir un écrasement maximal de l'amortisseur (14) en cas de mouvement angulaire de la bague intérieure (3) par rapport au boîtier extérieur (1).

9. Couronne selon l'une des revendications 7 ou 8, dans laquelle l'ergot (7) fait saillie axialement du plot d'écrasement (5) auquel il est fixé.

10. Couronne selon la revendication 9 et l'une des revendications 7 ou 8, dans laquelle l'ergot (7) fait saillie radialement du plot d'écrasement (5) auquel il est fixé.

11. Couronne selon l'une des revendications précédentes, dans laquelle le plot d'écrasement (5) fait saillie axialement de la bague intérieure (3).

12. Couronne selon l'une des revendications 1 à 10, dans laquelle la bague intérieure (3) est montée coaxialement à l'intérieur du boîtier extérieur (1), le plot d'écrasement (5) faisant saillie radialement de la bague intérieure (3).

13. Couronne selon l'une des revendications 1 à 12, dans lequel l'amortisseur (14) a une partie en contact avec la bague intérieure qui est une extrémité de l'amortisseur.

14. Réducteur à train épicycloïdal pour démarreur de véhicule automobile comportant une couronne selon l'une des revendications précédentes.

15. Démarreur de véhicule automobile du type à réducteur à train épicycloïdal comportant une couronne selon l'une des revendications 1 à 13.

## Patentansprüche

1. Getriebe für einen Getriebemotor mit einem Planentengetriebezug, umfassend:
- ein Außengehäuse (1),
- einen Innenring (3), der eine Innenverzahnung (4) aufweist, die geeignet ist, von den Planetenrädern des Getriebemotors in Eingriff gebracht zu werden, wobei der Innenring (3) gegen das Außengehäuse (1) befestigt ist, das zwischen ihnen eine Aufnahme (10) bildet,
- mindestens einen Quetschstift (5), der in der Aufnahme (10) angeordnet ist,
- mindestens einen Dämpfer (14), der in der Aufnahme (10) angeordnet ist, wobei der Dämpfer (14) relativ zu dem Quetschstift (5) derart angeordnet ist, um die Winkelbewegungen des Innenrings (3) in Bezug auf das Außengehäuse (1) in mindestens eine Richtung zu dämpfen;
- wobei der Quetschstift zwei radiale Flächen aufweist, wovon eine in Gleitkontakt mit einer radialen Fläche des Außengehäuses oder des Innenrings ist und die andere drehfest mit dem Innenring oder dem Außengehäuse ist, und **dadurch gekennzeichnet, dass** der Quetschstift, das Außengehäuse und der Innenring in einem Teil des Gehäuses einen geschlossenen Hohlraum von variablen Volumen bilden, in dem der Dämpfer derart angeordnet ist, dass die Verformungen des Dämpfers (14) begrenzt sind.

2. Getriebe nach dem vorhergehenden Anspruch, wobei das Außengehäuse (1) eine Vertiefung aufweist, die auf einer Seite durch den Innenring (1) geschlossen ist, und wobei der Quetschstift (5) mit dem Innenring fest verbunden ist.

3. Getriebe nach einem der vorhergehenden Ansprüche, wobei das Außengehäuse (1) eine Verschlussplatte (13) aufweist, wobei der geschlossene Hohlraum von der Aufnahme (10), dem Innenring (3), dem Quetschstift (5) und mindestens einem Teil der Verschlussplatte (13) gebildet ist.

4. Getriebe nach einem der vorhergehenden Ansprüche, wobei der Dämpfer (14) derart ausgebildet ist, um sich bis zu einer vorbestimmten Spannung in dem geschlossenen Hohlraum verformen zu können.

5. Getriebe nach einem der vorhergehenden Ansprüche, wobei der Dämpfer (14) radiale Abmessungen aufweist, die geringer sind als die radialen Abmessungen der Aufnahme (10).

6. Getriebe nach einem der vorhergehenden Ansprüche, wobei der Dämpfer (14) hohl ist.

7. Getriebe nach einem der vorhergehenden Ansprüche, wobei der Quetschstift (5) mit einem Sporn (7) versehen ist, der in einer Ausnehmung (15) des Außengehäuses (1) angeordnet ist, wobei der Sporn (7) gegenüber der Ausnehmung (15) derart ausgebildet ist, um gegen eine Wand der Ausnehmung (15) in Anschlag zu kommen, wenn der Innenring (3) einen vorbestimmten Winkelweg gegenüber dem Außengehäuse (1) vollführt hat.

8. Getriebe nach dem vorhergehenden Anspruch, wobei die Ausnehmung (15) derart dimensioniert ist, um eine maximale Quetschung des Dämpfers (14) bei einer Winkelbewegung des Innenrings (3) gegenüber dem Außengehäuse (1) zu definieren.

9. Getriebe nach einem der Ansprüche 7 oder 8, wobei der Sporn (7) axial von dem Quetschstift (5) hervorsteht, an dem er befestigt ist.

10. Getriebe nach Anspruch 9 und einem der Ansprüche 7 oder 8, wobei der Sporn (7) radial von dem Quetschstift (5) hervorsteht, an dem er befestigt ist.

11. Getriebe nach einem der vorhergehenden Ansprüche, wobei der Quetschstift (5) axial von dem Innenring (3) hervorsteht.

12. Getriebe nach einem der Ansprüche 1 bis 10, wobei der Innenring (3) im Inneren des Außengehäuses (1) koaxial befestigt ist, wobei der Quetschstift (5) radial von dem Innenring (3) hervorsteht.

13. Getriebe nach einem der Ansprüche 1 bis 12, wobei der Dämpfer (14) einen Teil in Kontakt mit dem Innenring aufweist, der ein Ende des Dämpfers ist.

14. Getriebemotor mit einem Planentengetriebezug für einen Anlasser eines Kraftfahrzeugs, umfassend ein Getriebe nach einem der vorhergehenden Ansprüche.

15. Anlasser eines Kraftfahrzeugs des Typs des Getriebemotors mit einem Planentengetriebezug, umfassend ein Getriebe nach einem der Ansprüche 1 bis 13.

## Claims

1. Annulus gear for a reduction gear unit with an epicyclic gear train, comprising:
- an outer casing (1);
- an inner ring (3) comprising an inner toothing (4) able to be engaged by planet wheels of the reduction gear unit, the inner ring (3) being mounted against the outer casing (1) so as to form a housing (10) between them,
- at least one crush stud (5) situated in the housing (10),
- at least one damper (14) situated in the housing (10), the damper (14) being arranged with respect to the crush stud (5) so as to damp the angular movements of the inner ring (3) with respect to the outer casing (1) in at least one direction;
- the crush stud comprising two radial surfaces of which one is in sliding contact with a radial surface of the outer casing or of the inner ring and the other is coupled in rotation with the inner ring or the outer casing, and **characterized in that** the crush stud, the outer casing and the inner ring form, in one part of the housing, a closed cavity of variable volume in which the damper is situated in such a way that the deformations of the said damper (14) are limited.

2. Annulus gear according to the preceding claim, in which the outer casing (1) comprises a hollow closed on one side by the inner ring (1) and in which the crush stud (5) is secured to the inner ring.

3. Annulus gear according to one of the preceding claims, in which the outer casing (1) comprises a closure plate (13), the closed cavity being formed by the housing (10), the inner ring (3), the crush stud (5) and at least one part of the closure plate (13).

4. Annulus gear according to one of the preceding claims, in which the damper (14) is arranged so as to be able to deform in the closed cavity up to a predetermined stress.

5. Annulus gear according to one of the preceding claims, in which the damper (14) has radial dimensions which are less than the radial dimensions of the housing (10).

6. Annulus gear according to one of the preceding claims, in which the damper (14) is hollow.

7. Annulus gear according to one of the preceding claims, in which the crush stud (5) is provided with a lug (7) housed in a cutout (15) of the outer casing (1), the lug (7) being arranged with respect to the cutout (15) so as to butt against a wall of the cutout (15) when the inner ring (3) has carried out a predetermined angular travel with respect to the outer casing (1).

8. Annulus gear according to the preceding claim, in which the cutout (15) is dimensioned so as to define a maximum crushing of the damper (14) in the case of an angular movement of the inner ring (3) with respect to the outer casing (1).

9. Annulus gear according to either of Claims 7 and 8, in which the lug (7) projects axially from the crush stud (5) to which it is fixed.

10. Annulus gear according to Claim 9 and either of Claims 7 and 8, in which the lug (7) projects radially from the crush stud (5) to which it is fixed.

11. Annulus gear according to one of the preceding claims, in which the crush stud (5) projects axially from the inner ring (3).

12. Annulus gear according to one of Claims 1 to 10, in which the inner ring (3) is mounted coaxially inside the outer casing (1), the crush stud (5) projecting radially from the inner ring (3).

13. Annulus gear according to one of Claims 1 to 12, in which the damper (14) has a part in contact with the inner ring, which is one end of the damper.

14. Reduction gear unit with an epicyclic gear train for a motor vehicle starter, comprising an annulus gear according to one of the preceding claims.

15. Motor vehicle starter of the type having a reduction gear unit with an epicyclic gear train, comprising an annulus gear according to one of Claims 1 to 13.
